# EUROPÄISCHE PATENTSCHRIFT

(11) **EP 3 239 076 B1**
(45) Veröffentlichungstag und Bekanntmachung des Hinweises auf die Patenterteilung: **08.05.2019**
(21) Anmeldenummer: 17162363.0
(22) Anmeldetag: 22.03.2017
(51) Int. Cl.: B65G 23/24, B26D 7/32, B65G 15/50, F16D 1/02

(54) **FÖRDEREINHEIT**
CONVEYOR UNIT
CONVOYEUR

(30) Priorität: 29.04.2016 DE 102016107997
(43) Veröffentlichungstag der Anmeldung: 01.11.2017
(73) Patentinhaber: Weber Maschinenbau GmbH Breidenbach, 35236 Breidenbach (DE)
(72) Erfinder: Bauer, Sigfrid, 17091 Groß-Tetzleben (DE)
(74) Vertreter: Manitz Finsterwald Patent- und Rechtsanwaltspartnerschaft mbB

(56) Entgegenhaltungen:
- EP-A1- 2 863 084
- DE-A1-102013 206 510
- JP-A- S55 139 519
- JP-A- 2008 290 797
- US-A- 1 085 774
- US-A- 5 163 543

## Beschreibung

Die vorliegende Erfindung betrifft eine Fördereinheit, welche eine einen ersten Wellenabschnitt aufweisende erste Antriebsrolle zum Antreiben einer ersten Bandspur und eine einen zweiten Wellenabschnitt aufweisende zweite Antriebsrolle zum Antreiben einer zweiten Bandspur umfasst, wobei die erste Antriebsrolle und die zweite Antriebsrolle koaxial nebeneinander angeordnet sind. Zum Antreiben der ersten Antriebsrolle umfasst die Fördereinheit eine erste Antriebswelle und zum Antreiben der zweiten Antriebsrolle eine zweite Antriebswelle.

Derartige Fördereinheiten sind grundsätzlich bekannt und werden beispielsweise bei einer Lebensmittelschneidevorrichtung, insbesondere einem Hochleistungsslicer, als Produktauflage benutzt, z. B. für die Produktzufuhr. Bei einem Hochleistungsslicer werden in einer Schneidebene in der Regel mehrere Lebensmittelprodukte gleichzeitig geschnitten, die parallel zueinander relativ zur Schneidebene vorgeschoben werden. Bei früheren Hochleistungsslicern wurde der Vorschub mehrerer Lebensmittelprodukte durch einen gemeinsamen Bandantrieb realisiert. Mittlerweile erfolgt der Produktvorschub jedoch individuell, indem jedes Produkt auf einer eigenen unabhängig angetriebenen Bandspur vorgeschoben wird.

Eine Fördereinheit gemäß dem Oberbegriff von Anspruch 1 ist aus der US 5 163 543 A bekannt.

Solche Fördereinheiten sind aber durch das Vorsehen zusätzlicher Antriebseinheiten konstruktiv beschränkt und in der Montage, Wartung und Reinigung kompliziert. Es ist deshalb eine der Erfindung zugrunde liegende Aufgabe, eine mehrspurige Fördereinheit zu schaffen, welche die vorgenannten Nachteile überwindet.

Diese Aufgabe wird durch eine Fördereinheit gemäß Anspruch 1 und insbesondere dadurch gelöst, dass der erste Wellenabschnitt zumindest abschnittsweise innerhalb des zweiten Wellenabschnitts verläuft, die erste Antriebswelle zumindest abschnittsweise innerhalb der zweiten Antriebswelle verläuft und eine Kupplung zur lösbaren Verbindung des ersten Wellenabschnitts mit der ersten Antriebswelle und des zweiten Wellenabschnitts mit der zweiten Antriebswelle in einer gemeinsamen Trennebene vorgesehen ist.

Mit anderen Worten umfasst die erfindungsgemäße Fördereinheit zwei ineinander geschachtelte Antriebswellen, die jeweils über einen zugeordneten Wellenabschnitt mit einer entsprechenden Antriebsrolle verbindbar sind. Die gemeinsame Kupplung ermöglicht die Einleitung der Drehbewegungen beider Antriebsrollen von derselben Seite sowie eine einfache Trennung der Antriebsrollen von den Antriebswellen, insbesondere in radialer Richtung in Bezug auf die Drehachse. Demnach zeichnet sich die Fördereinheit durch eine kompakte Bauweise und einfache Bedienung aus, welche eine einfache und sichere Montage bzw. Demontage ermöglicht.

Obwohl hier der Einfachheit halber von lediglich zwei ineinander verschachtelten Wellenabschnitten und Antriebswellen die Rede ist, versteht es sich, dass das Grundprinzip der Verschachtelung auf eine größere Anzahl von Antriebsrollen bzw. Wellenabschnitten und Antriebswellen übertragen werden kann. Beispielsweise können drei oder mehr Wellen ineinander angeordnet sein.

Vorteilhafte Weiterbildungen der Erfindung sind der Beschreibung, den Zeichnungen sowie den Unteransprüchen zu entnehmen.

Erfindungsgemäß sorgt die Kupplung für einen radial trennbaren Formschluss zwischen dem ersten Wellenabschnitt und der ersten Antriebswelle sowie dem zweiten Wellenabschnitt und der zweiten Antriebswelle. Dabei können insbesondere der erste Wellenabschnitt und der zweite Wellenabschnitt gemeinsam eine erste Kupplungshälfte ausbilden und die erste Antriebswelle und die zweite Antriebswelle gemeinsam eine an die erste Kupplungshälfte angepasste zweite Kupplungshälfte ausbilden. Bei einer korrekten Ausrichtung des ersten und des zweiten Wellenabschnittes bzw. der ersten und der zweiten Antriebswelle relativ zueinander kann die Trennung der Kupplung einfach und insbesondere werkzeuglos erfolgen.

Bevorzugt weist die erste Kupplungshälfte ein durch den ersten Wellenabschnitt und den zweiten Wellenabschnitt gebildetes, in radialer Richtung gesehen keilförmiges erstes Kupplungsteil und die zweite Kupplungshälfte ein durch die erste Antriebswelle und die zweite Antriebswelle gebildetes, in radialer Richtung gesehen keilförmiges zweites Kupplungsteil auf. Diese keilförmige Ausgestaltung ermöglicht eine spielarme Verbindung der Kupplungshälften und eine vereinfachte Handhabung, insbesondere eine einfacheres Ineingriffbringen der Kupplungshälften.

Insbesondere können das erste Kupplungsteil ein keilförmiger Steg und das zweite Kupplungsteil eine an den Steg angepasste Nut sein. Der keilförmige Steg umfasst beispielsweise einen radial inneren Stegabschnitt an dem ersten Wellenabschnitt sowie zwei den inneren Stegabschnitt beidseitig konturmäßig fortsetzende Zapfen an dem zweiten Wellenabschnitt. Dabei verläuft die keilförmige Nut entlang des Durchmessers der ersten und der zweiten Antriebswelle, sodass die Antriebswellen Einführungsschrägen für den keilförmigen Steg bilden.

Gemäß einer weiteren Ausführungsform ist zumindest ein Teil einer Kontaktfläche der ersten und/oder zweiten Kupplungshälfte jeweils mit einem Dämpfungsmaterial, z. B. einem Kunststoffmaterial, versehen oder es besteht aus einem Dämpfungsmaterial. Beispielsweise kann das Dämpfungsmaterial als einfach auswechselbares Verschleißteil vorgesehen sein, oder eine Kontaktfläche der ersten und/oder zweiten Kupplungshälfte kann vollständig mit einem Dämpfungsmaterial, z. B. einem Kunststoffmaterial, überzogen sein.

Die Kupplung kann ferner mittels eines die Kupplung auf einer Drehachse durchgreifenden Zentrierstiftes gegen eine Trennung verriegelbar sein. Für eine Verriegelung der Kupplung im Betriebszustand kann der Zentrierstift insbesondere manuell oder pneumatisch in axialer Richtung betätigbar sein derart, dass er die Kupplung durchgreift und axial zentriert.

Zum Antreiben der Fördereinheit können gemäß einer weiteren Ausführungsform die erste Antriebswelle eine erste Riemenscheibe und die zweite Antriebswelle eine zweite Riemenscheibe tragen.

Gemäß noch einer weiteren Ausführungsform ist ein Servomotor zur Rotation der Kupplung in eine Trennungs- bzw. Montagelage vorgesehen. Alternativ oder zusätzlich kann die Kupplung zumindest eine Markierung zur manuellen Einstellung der Kupplung in eine Trennungs- bzw. Montagelage umfassen. Durch diese Maßnahmen können sowohl die radial inneren und die radial äußeren Kupplungsteile einer jeweiligen Kupplungshälfte als auch die Kupplungshälften leicht derart miteinander ausgerichtet werden, dass die Kupplung radial in oder außer Eingriff gebracht werden kann.

Weiterer Gegenstand der Erfindung ist eine Transportvorrichtung mit zwei Fördereinheiten, die spiegelbildlich derart angeordnet sind, dass die Antriebsrollen, die Wellenabschnitte und die Antriebswellen beider Fördereinheiten auf einer gemeinsamen Drehachse liegen. Hierdurch können je nach Ausbildung der Fördereinheiten insgesamt vier oder mehr unabhängig angetriebene Band- und Produktspuren realisiert werden, während die Fördereinheiten Platz sparend von entgegengesetzten Seiten der Transportvorrichtung her angetrieben werden.

Ferner betrifft die Erfindung eine Lebensmittelschneidevorrichtung, insbesondere einen Hochleistungsslicer, mit mindestens einer erfindungsgemäßen Fördereinheit und/oder mindestens einer erfindungsgemäßen Transportvorrichtung.

Die Ausführungen zu der erfindungsgemäßen Fördereinheit, insbesondere hinsichtlich Vorteilen und bevorzugten Ausführungsformen, gelten für die erfindungsgemäße Transportvorrichtung und den erfindungsgemäßen Hochleistungsslicer entsprechend.

Nachfolgend wird die Erfindung rein beispielhaft unter Bezugnahme auf die Zeichnung beschrieben. Es zeigen:
- Fig. 1: eine Draufsicht auf eine erste Ausführungsform einer erfindungsgemäßen Fördereinheit;
- Fig. 2: eine Schnittansicht von Antriebsrollen, Wellenabschnitten, Antriebswellen und einer Kupplung der Fördereinheit von Fig. 1 entlang einer Drehachse X;
- Fig. 3A und 3B: eine schematische Darstellung einer Kupplung zur Verbindung der Wellenabschnitte und der Antriebswellen in einer Trennlage und einer Montagelage; und
- Fig. 4: eine Draufsicht auf eine erfindungsgemäße Transportvorrichtung.

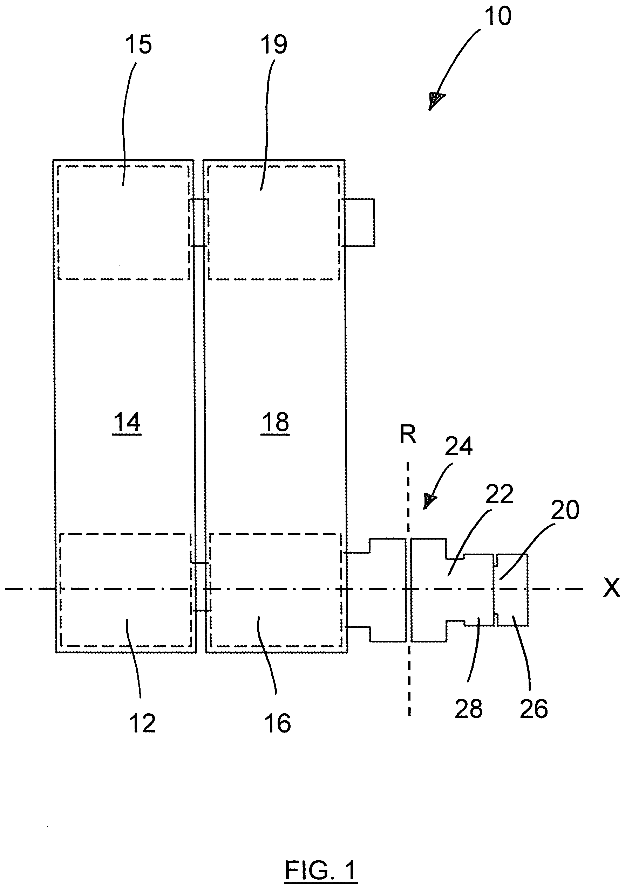

Fig. 1 zeigt eine Fördereinheit 10 mit einer ersten Antriebsrolle 12 zum Antreiben einer über eine erste Leerlaufrolle 15 geführten ersten Bandspur 14 und einer zweiten Antriebsrolle 16 zum Antreiben einer über eine zweite Leerlaufrolle 19 geführten zweiten Bandspur 18, wobei die erste Bandspur 14 und die zweite Bandspur 18 parallel zueinander verlaufen und jeweils als Endlosförderer ausgebildet sind. Die erste Antriebsrolle 12 und die zweite Antriebsrolle 16 sind auf einer gemeinsamen Drehachse X koaxial nebeneinander angeordnet.

Die Fördereinheit 10 umfasst ferner eine der ersten Antriebsrolle 12 zugeordnete erste Antriebswelle 20, die über eine erste Riemenscheibe 26 von einem ersten nicht dargestellten Riemenantrieb angetrieben wird, sowie eine der zweiten Antriebsrolle 16 zugeordnete zweite Antriebswelle 22, die über eine zweite Riemenscheibe 28 von einem zweiten nicht dargestellten Riemenantrieb angetrieben wird.

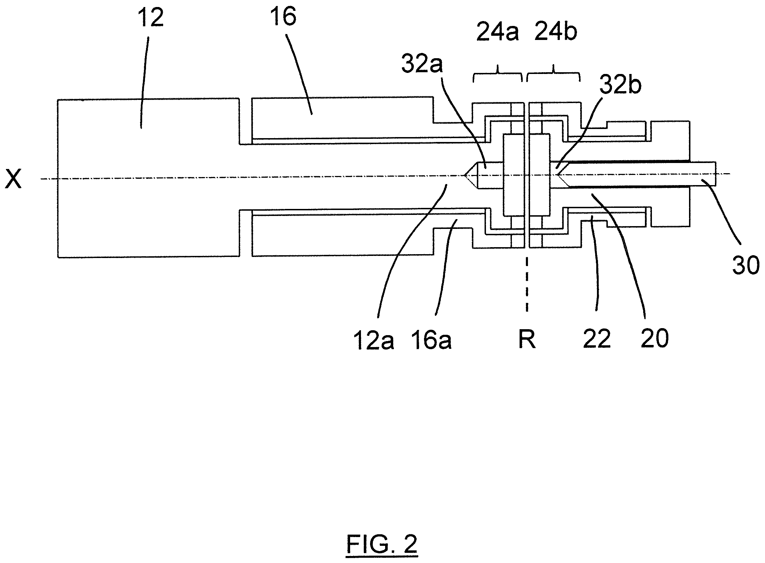

Zwischen den Antriebsrollen 12, 16 und den Antriebswellen 20, 22 ist eine Kupplung 24 angeordnet, die in einer gemeinsamen Trennebene R radial trennbar ausgestaltet ist. Die Konstruktion der Kupplung 24 wird nachfolgend anhand von Fig. 2 näher erläutert.

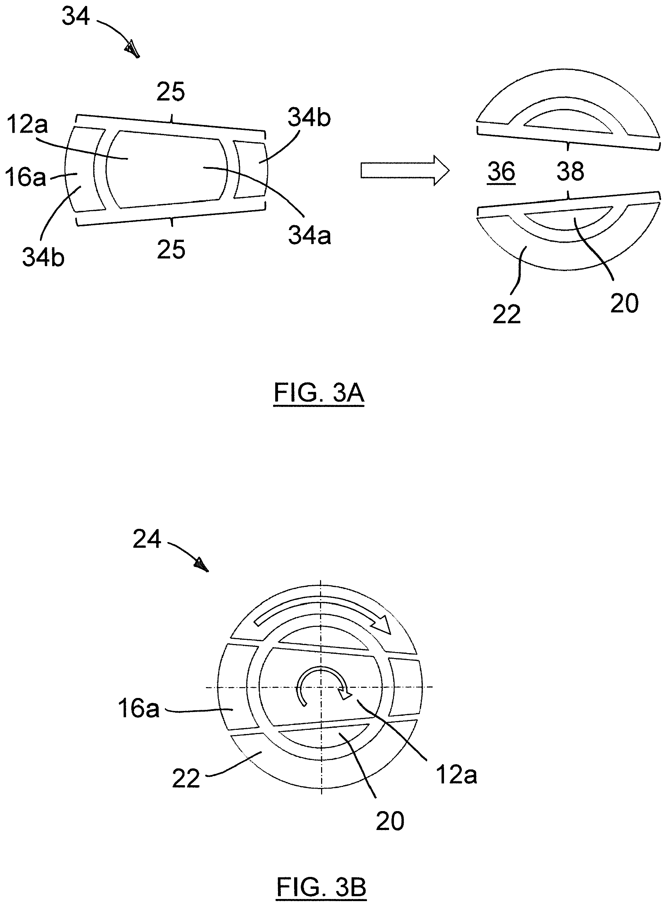

Fig. 2 ist eine Schnittansicht der Fördereinheit 10 entlang der Drehachse X und zeigt, wie ein erster Wellenabschnitt 12a der ersten Antriebsrolle 12 abschnittsweise innerhalb eines zweiten Wellenabschnittes 16a der zweiten Antriebsrolle 16 verläuft. An ihren den Antriebsrollen 12, 16 abgewandten Stirnseiten bilden die Wellenabschnitte 12a, 16a zusammen eine erste Kupplungshälfte 24a. Ähnlich verläuft die erste Antriebswelle 20 abschnittsweise innerhalb der zweiten Antriebswelle 22, wobei die Antriebswellen 20, 22 an ihren den Antriebsrollen 12, 16 zugewandten Stirnseiten eine der ersten Kupplungshälfte 24a zugeordnete zweite Kupplungshälfte 24b bilden. Die Kupplungshälften 24a, 24b sind in Fig. 2 rein schematisch dargestellt und können einen Formschluss bilden, wie er in Fig. 3A und 3B genauer dargestellt ist. Die Kupplungshälften 24a, 24b ermöglichen eine drehfeste Kupplung zwischen dem ersten Wellenabschnitt 12a und der ersten Antriebswelle 20 sowie zwischen dem zweiten Wellenabschnitt 16a und der zweiten Antriebswelle 22.

Fig. 2 zeigt ferner einen Zentrierstift 30, der eine im ersten Wellenabschnitt 12a vorgesehene erste Zentrierbohrung 32a sowie eine in der ersten Antriebswelle 20 vorgesehene zweite Zentrierbohrung 32b durchgreift und die Antriebsrollen 12, 16, die Wellenabschnitte 12a, 16a und die Antriebswellen 20, 22 auf der Drehachse X zentriert. Gleichzeitig wird in dieser Betriebsposition durch den Zentrierstift 30 eine versehentliche Trennung der Kupplung 24 in der radialen Richtung verhindert. Der Zentrierstift 30 ist dabei von der ersten Antriebswelle 20 und dem ersten Wellenabschnitt 12a entkoppelt, d. h. die erste Antriebswelle 20 und der erste Wellenabschnitt 12a können relativ zum Zentrierstift 30 drehen und es findet keine Drehmomentübertragung über den Zentrierstift 30 statt. Zur Verriegelung bzw. Entriegelung der Kupplung 24 kann der Zentrierstift 30 pneumatisch oder manuell entlang der Drehachse X bewegt werden.

Fig. 3 ist eine schematische Darstellung der Kupplung 24 in einer Trennungs- bzw. Montagelage und zwar zum einen in einem getrennten Zustand (Fig. 3A), in welchem die Kupplungshälften 24a, 24b außer Eingriff stehen und in Eingriff gebracht werden können, und zum anderen in einem eingekuppelten Zustand (Fig. 3B), in welchem der erste Wellenabschnitt 12a und die erste Antriebswelle 20 sowie der zweite Wellenabschnitt 16a und die zweite Antriebswelle 22 jeweils einen Formschluss bilden.

Die erste Kupplungshälfte 24a weist ein in radialer Richtung gesehen keilförmiges erstes Kupplungsteil, nämlich einen keilförmigen Steg 34, auf, wohingegen die zweite Kupplungshälfte 24b ein durch die erste Antriebswelle 20 und die zweite Antriebswelle 22 gebildetes, in radialer Richtung gesehen keilförmiges zweites Kupplungsteil aufweist, nämlich eine an den Steg 34 angepasste Nut 36. Der keilförmige Steg 34 umfasst einen radial inneren Stegabschnitt 34a an dem ersten Wellenabschnitt 12a sowie zwei den inneren Stegabschnitt 34a beidseitig konturmäßig fortsetzende Zapfen 34b an dem zweiten Wellenabschnitt 16a. Die keilförmige Nut 36 verläuft entlang des Durchmessers der ersten und der zweiten Antriebswelle 20, 22, sodass die Antriebswellen 20, 22 Einführungsschrägen 38 für den keilförmigen Steg 34 bilden.

Schräg verlaufende Kontaktflächen 25 des keilförmigen Steges 34 sind mit einem Dämpfungsmaterial ausgestattet, welches als Kunststoffüberzug oder auch als ein einfach auswechselbares Verschleißteil vorgesehen werden kann. Alternativ oder zusätzlich kann das Dämpfungsmaterial an den Einführungsschrägen 38 der keilförmigen Nut 36 vorgesehen sein.

In der in Fig. 3 dargestellten Trennungs- bzw. Montagelage sind die Antriebswellen 20, 22 bzw. die Wellenabschnitte 12, 16 relativ zueinander derart ausgerichtet, dass die erste Kupplungshälfte 24a den keilförmigen Steg 34 und die zweite Kupplungshälfte 24b die keilförmige Nut 36 bilden. Hierzu können die Kupplungshälften 24a, 24b mittels eines Servomotors geeignet verdreht werden. Alternativ kann zumindest eine Markierung vorgesehen sein (nicht dargestellt), mittels der ein Benutzer die Trennungs- bzw. Montagelage der Kupplungshälften 24a, 24b manuell einstellen kann.

Zum Einkuppeln der Kupplungshälften 24a, 24b wird der keilförmige Steg 34 mit seinem sich verjüngendem Ende voraus in die keilförmige Nut 36 eingeführt. Die erste Kupplungshälfte 24a wird hierzu in Richtung des Pfeils bewegt, bis die Kontaktflächen 25 des keilförmigen Stegs 34 mit den Einführungsschrägen 38 der keilförmigen Nut 36 in Eingriff geraten. In dieser Lage ist eine Verdrehung des ersten Wellenabschnittes 12a und der ersten Antriebswelle 20 relativ zu dem zweiten Wellenabschnitt 16a und der zweiten Antriebswelle 22 und somit eine unabhängige Ansteuerung der ersten und der zweiten Antriebsrolle 12, 16 möglich.

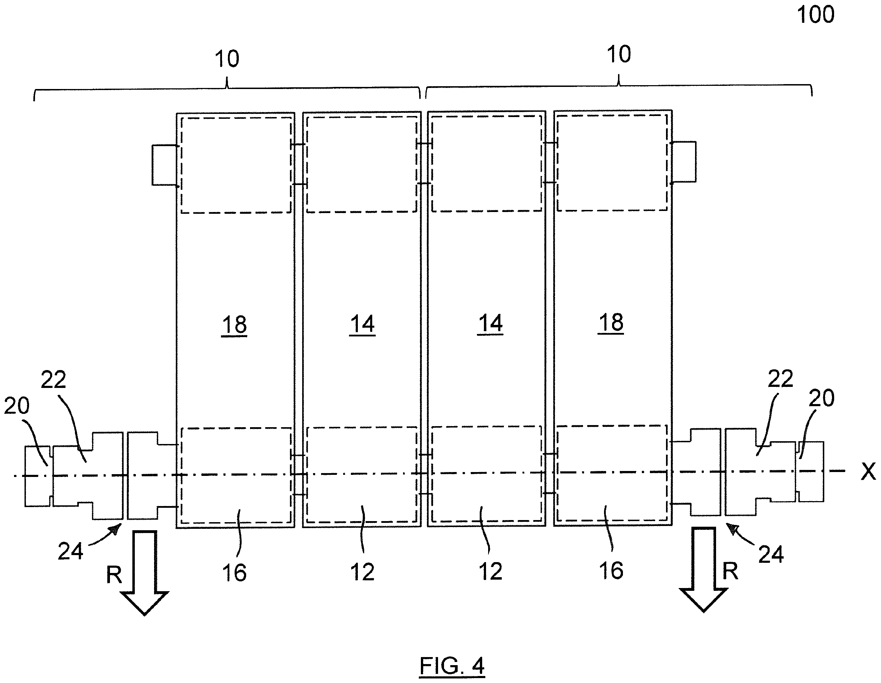

Fig. 4 zeigt eine Transportvorrichtung 100 mit zwei Fördereinheiten 10, die z. B. in einem Hochleistungsslicer eingesetzt werden kann. In dieser Transportvorrichtung 100 sind die Fördereinheiten 10 spiegelbildlich derart nebeneinander angeordnet, dass alle vier Antriebsrollen 12, 16 sowie ihre Wellenabschnitte und die zugeordneten vier Antriebswellen 20, 22 koaxial auf der gemeinsamen Drehachse X liegen. Die vier Bandspuren lassen sich spurindividuell antreiben, wobei der Antrieb des einen Paars von Antriebsrollen 12, 16 von der einen Seite der Transportvorrichtung 100 und der Antrieb des anderen Paars von Antriebsrollen 12, 16 von der anderen Seite der Transportvorrichtung 100 her erfolgt. Mittels der Kupplungen 24 können die Bandspuren 14, 18 und Antriebsrollen 12, 16 jeweils einer Fördereinheit 10 oder auch beider Fördereinheiten 10 gleichzeitig ausgebaut werden, z. B. zu Reinigungszwecken, und anschließend wieder montiert werden.

### Bezugszeichenliste

- 10: Fördereinheit
- 12: erste Antriebsrolle
- 12a: erster Wellenabschnitt
- 14: erste Bandspur
- 15: erste Leerlaufrolle
- 16: zweite Antriebsrolle
- 16a: zweiter Wellenabschnitt
- 18: zweite Bandspur
- 19: zweite Leerlaufrolle
- 20: erste Antriebswelle
- 22: zweite Antriebswelle
- 24: radial trennbare Kupplung
- 24a: erste Kupplungshälfte
- 24b: zweite Kupplungshälfte
- 25: Kontaktfläche
- 26: erste Riemenscheibe
- 28: zweite Riemenscheibe
- 30: Zentrierstift
- 32a, 32b: Zentrierbohrung
- 34: keilförmiger Steg
- 34a: innerer Stegabschnitt
- 34b: Zapfen
- 36: keilförmige Nut
- 38: Einführungsschrägen
- 100: Transportvorrichtung

- R: radiale Trennebene
- X: Drehachse

## Patentansprüche

1. Fördereinheit (10) mit
einer einen ersten Wellenabschnitt (12a) aufweisenden ersten Antriebsrolle (12) zum Antreiben einer ersten Bandspur (14),
einer einen zweiten Wellenabschnitt (16a) aufweisenden zweiten Antriebsrolle (16) zum Antreiben einer zweiten Bandspur (18), wobei die erste Antriebsrolle (12) und die zweite Antriebsrolle (16) koaxial nebeneinander angeordnet sind,
einer ersten Antriebswelle (20) zum Antreiben der ersten Antriebsrolle (12) und
einer zweiten Antriebswelle (22) zum Antreiben der zweiten Antriebsrolle (16), wobei
der erste Wellenabschnitt (12a) zumindest abschnittsweise innerhalb des zweiten Wellenabschnitts (16a) verläuft, und
die erste Antriebswelle (20) zumindest abschnittsweise innerhalb der zweiten Antriebswelle (22) verläuft,
**dadurch gekennzeichnet, dass**
eine Kupplung (24) zur lösbaren Verbindung des ersten Wellenabschnitts (12a) mit der ersten Antriebswelle (20) und des zweiten Wellenabschnitts (16a) mit der zweiten Antriebswelle (22) in einer gemeinsamen Trennebene (R) vorgesehen ist und
die Kupplung (24) für einen radial trennbaren Formschluss zwischen dem ersten Wellenabschnitt (12a) und der ersten Antriebswelle (20) sowie dem zweiten Wellenabschnitt (16a) und der zweiten Antriebswelle (22) sorgt.

2. Fördereinheit (10) nach Anspruch 1,
**dadurch gekennzeichnet, dass**
der erste Wellenabschnitt (12a) und der zweite Wellenabschnitt (16a) gemeinsam eine erste Kupplungshälfte (24a) ausbilden und die erste Antriebswelle (20) und die zweite Antriebswelle (22) gemeinsam eine an die erste Kupplungshälfte (24a) angepasste zweite Kupplungshälfte (24b) ausbilden.

3. Fördereinheit (10) nach Anspruch 2,
**dadurch gekennzeichnet, dass**
die erste Kupplungshälfte (24a) ein durch den ersten Wellenabschnitt (12a) und den zweiten Wellenabschnitt (16a) gebildetes, in radialer Richtung gesehen keilförmiges erstes Kupplungsteil aufweist und die zweite Kupplungshälfte (24b) ein durch die erste Antriebswelle (20) und die zweite Antriebswelle (22) gebildetes, in radialer Richtung gesehen keilförmiges zweites Kupplungsteil aufweist.

4. Fördereinheit (10) nach Anspruch 3,
**dadurch gekennzeichnet, dass**
das erste Kupplungsteil ein Steg (34) ist und das zweite Kupplungsteil eine an den Steg (34) angepasste Nut (36) ist, insbesondere wobei sich der Steg (34) über eine Stirnseite der ersten Kupplungshälfte (24a) und die Nut (36) über eine Stirnseite der zweiten Kupplungshälfte (24b) erstreckt.

5. Fördereinheit (10) nach zumindest einem der Ansprüche 2 bis 4,
**dadurch gekennzeichnet, dass** zumindest ein Teil einer Kontaktfläche (25) der ersten und/oder zweiten Kupplungshälfte (24a, 24b) jeweils mit einem Dämpfungsmaterial, z. B. einem Kunststoffmaterial, versehen ist oder aus einem Dämpfungsmaterial besteht.

6. Fördereinheit (10) nach zumindest einem der vorstehenden Ansprüche,
**dadurch gekennzeichnet, dass**
die Kupplung (24) mittels eines die Kupplung (24) auf einer Drehachse (X) durchgreifenden Zentrierstiftes (30) gegen eine Trennung verriegelbar ist, wobei der Zentrierstift (30) insbesondere manuell oder pneumatisch in axialer Richtung betätigbar ist.

7. Fördereinheit (10) nach zumindest einem der vorstehenden Ansprüche,
**dadurch gekennzeichnet, dass**
die erste Antriebswelle (20) eine erste Riemenscheibe (26) trägt und die zweite Antriebswelle (22) eine zweite Riemenscheibe (28) trägt.

8. Fördereinheit (10) nach zumindest einem der Ansprüche 2 bis 7,
**gekennzeichnet durch**
einen Servomotor zur Rotation zumindest einer der Kupplungshälften (24a, 24b) in eine Trennungs- bzw. Montagelage.

9. Fördereinheit (10) nach zumindest einem der vorstehenden Ansprüche,
**dadurch gekennzeichnet, dass**
die Kupplung (24) zumindest eine Markierung zur manuellen Einstellung der Kupplung (24) in eine Trennungs- bzw. Montagelage umfasst.

10. Transportvorrichtung (100) mit zwei Fördereinheiten (10) nach zumindest einem der vorhergehenden Ansprüche, wobei die Fördereinheiten (10) spiegelbildlich derart angeordnet sind, dass die Antriebsrollen (12, 16), die Wellenabschnitte (12a, 16a) und die Antriebswellen (20, 22) beider Fördereinheiten (10) auf einer gemeinsamen Drehachse (X) liegen.

11. Lebensmittelschneidevorrichtung, insbesondere Hochleistungsslicer, mit mindestens einer Fördereinheit (10) nach zumindest einem der vorhergehenden Ansprüche 1 bis 9 und/oder einer Transportvorrichtung (100) nach Anspruch 10.

## Claims

1. A conveying unit (10) comprising
a first drive roller (12) having a first shaft section (12a) for driving a first belt track (14);
a second drive roller (16) having a second shaft section (16a) for driving a second belt track (18), with the first drive roller (12) and the second drive roller (16) being arranged coaxially next to one another;
a first drive shaft (20) for driving the first drive roller (12); and
a second drive shaft (22) for driving the second drive roller (16), wherein
the first shaft section (12a) extends at least sectionally within the second shaft section (16a); and
the first drive shaft (20) extends at least sectionally within the second drive shaft (22),
**characterized in that**
a coupling (24) for a releasable connection of the first shaft section (12a) to the first drive shaft (20) and of the second shaft section (16a) to the second drive shaft (22) is provided in a common separation plane (R); and
the coupling (24) provides a radially separable shape match between the first shaft section (12a) and the first drive shaft (20) as well as between the second shaft section (16a) and the second drive shaft (22).

2. A conveying unit (10) in accordance with claim 1,
**characterized in that**
the first shaft section (12a) and the second shaft section (16a) together form a first coupling half (24a) and the first drive shaft (20) and the second drive shaft (22) together form a second coupling half (24b) adapted to the first coupling half (24a).

3. A conveying unit (10) in accordance with claim 2,
**characterized in that**
the first coupling half (24a) has a first coupling part which is wedge-shaped viewed in a radial direction and which is formed by the first shaft section (12a) and by the second shaft section (16a); and the second coupling half (24b) has a second coupling part which is wedge-shaped viewed in the radial direction and which is formed by the first drive shaft (20) and by the second drive shaft (22).

4. A conveying unit (10) in accordance with claim 3,
**characterized in that**
the first coupling part is a web (34) and the second coupling part is a groove (36) adapted to the web (34), in particular with the web (34) extending over an end face of the first coupling half (24a) and the groove (36) extending over an end face of the second coupling half (24b).

5. A conveying unit (10) in accordance with at least one of the claims 2 to 4,
**characterized in that**
at least a part of a contact surface (25) of the first and/or second coupling half (24a, 24b) is respectively provided with a damping material, e.g. with a plastic material, or consists of a damping material.

6. A conveying unit (10) in accordance with at least one of the preceding claims,
**characterized in that**
the coupling (24) can be locked against a separation by means of a centering pin (30) engaging through the coupling (24) at an axis of rotation (X), with the centering pin (30) in particular being manually or pneumatically actuable in an axial direction.

7. A conveying unit (10) in accordance with at least one of the preceding claims,
**characterized in that**
the first drive shaft (20) supports a first belt pulley (26) and the second drive shaft (22) supports a second belt pulley (28).

8. A conveying unit (10) in accordance with at least one of the claims 2 to 7,
**characterized by**
a servomotor for rotating at least one of the coupling halves (24a, 24b) into a separation location or into an assembly location.

9. A conveying unit (10) in accordance with at least one of the preceding claims,
**characterized in that**
the coupling (24) comprises at least one marking for a manual setting of the coupling (24) into a separation location or into an assembly location.

10. A transport apparatus (100) comprising two conveying units (10) in accordance with at least one of the preceding claims, wherein the conveying units (10) are arranged in mirror symmetry such that the drive rollers (12, 16), the shaft sections (12a, 16a) and the drive shafts (20, 22) of both conveying units (10) are disposed at a common axis of rotation (X).

11. A food slicing apparatus, in particular a high-performance slicer, comprising at least one conveying unit (10) in accordance with at least one of the preceding claims 1 to 9; and/or a transport apparatus (100) in accordance with claim 10.

## Revendications

1. Ensemble convoyeur (10) comportant
un premier rouleau d'entraînement (12) présentant un premier tronçon d'arbre (12a) et destiné à entraîner une première voie de bande (14),
un second rouleau d'entraînement (16) présentant un second tronçon d'arbre (16a) et destiné à entraîner une seconde voie de bande (18), le premier rouleau d'entraînement (12) et le second rouleau d'entraînement (16) étant agencés coaxialement l'un à côté de l'autre,
un premier arbre d'entraînement (20) destiné à entraîner le premier rouleau d'entraînement (12), et
un second arbre d'entraînement (22) destiné à entraîner le second rouleau d'entraînement (16),
le premier tronçon d'arbre (12a) s'étendant au moins localement à l'intérieur du second tronçon d'arbre (16a), et
le premier arbre d'entraînement (20) s'étendant au moins localement à l'intérieur du second arbre d'entraînement (22),
**caractérisé en ce que**
il est prévu un moyen d'accouplement (24) pour la liaison détachable du premier tronçon d'arbre (12a) avec le premier arbre d'entraînement (20) et du second tronçon d'arbre (16a) avec le second arbre d'entraînement (22) dans un plan de séparation commun (R), et
le moyen d'accouplement (24) assure une coopération de forme séparable radialement entre le premier tronçon d'arbre (12a) et le premier arbre d'entraînement (20) ainsi qu'entre le second tronçon d'arbre (16a) et le second arbre d'entraînement (22).

2. Ensemble convoyeur (10) selon la revendication 1,
**caractérisée en ce que**
le premier tronçon d'arbre (12a) et le second tronçon d'arbre (16a) réalisent conjointement une première moitié d'accouplement (24a) et le premier arbre d'entraînement (20) et le second arbre d'entraînement (22) réalisent conjointement une seconde moitié d'accouplement (24b) adaptée à la première moitié d'accouplement (24a).

3. Ensemble convoyeur (10) selon la revendication 2,
**caractérisé en ce que**
la première moitié d'accouplement (24a) comprend une première partie d'accouplement qui, vue en direction radiale, présente une forme de coin et est formée par le premier tronçon d'arbre (12a) et par le second tronçon d'arbre (16a), et la seconde moitié d'accouplement (24b) comprend une seconde partie d'accouplement qui, vue en direction radiale, présente une forme de coin et est formée par le premier arbre d'entraînement (20) et par le second arbre d'entraînement (22).

4. Ensemble convoyeur (10) selon la revendication 3,
**caractérisé en ce que**
la première partie d'accouplement est une barrette (34) et la seconde partie d'accouplement est une gorge (36) adaptée à la barrette (34), en particulier la barrette (34) s'étendant sur une face frontale de la première partie d'accouplement (24a) et la gorge (36) s'étendant sur une face frontale de la seconde moitié d'accouplement (24b).

5. Ensemble convoyeur (10) selon l'une au moins des revendications 2 à 4,
**caractérisé en ce que**
une partie au moins d'une surface de contact (25) de la première et/ou seconde moitié d'accouplement (24a, 24b) est pourvue d'un matériau d'amortissement respectif, par exemple d'une matière plastique, ou est constituée d'un matériau d'amortissement.

6. Ensemble convoyeur (10) selon l'une au moins des revendications précédentes,
**caractérisé en ce que**
le moyen d'accouplement (24) est verrouillable à l'encontre d'une séparation à l'aide d'une tige de centrage (30) traversant le moyen d'accouplement (24) sur un axe de rotation (X), la tige de centrage (30) pouvant être actionnée en direction axiale en particulier par voie manuelle ou pneumatique.

7. Ensemble convoyeur (10) selon l'une au moins des revendications précédentes,
**caractérisé en ce que**
le premier arbre d'entraînement (20) porte une première poulie (26) et le second arbre d'entraînement (22) porte une seconde poulie (28).

8. Ensemble convoyeur (10) selon l'une au moins des revendications 2 à 7,
**caractérisé par**
un servomoteur pour la mise en rotation de l'une au moins des moitiés d'accouplement (24a, 24b) jusque dans une position de séparation ou de montage.

9. Ensemble convoyeur (10) selon l'une au moins des revendications précédentes,
**caractérisé en ce que**
le moyen d'accouplement (24) comprend au moins un marquage pour le réglage manuel du moyen d'accouplement (24) jusque dans une position de séparation ou de montage.

10. Dispositif de transport (100) comportant deux ensembles convoyeurs (10) selon l'une au moins des revendications précédentes, les ensembles convoyeurs (10) étant agencés symétriquement, de telle sorte que les rouleaux d'entraînement (12, 16), les tronçons d'arbre (12a, 16a) et les arbres d'entraînement (20, 22) des deux ensembles convoyeurs (10) se situent sur un axe de rotation commun (X).

11. Dispositif de coupe de produits alimentaires, en particulier trancheuse à haute performance, comportant au moins un ensemble convoyeur (10) selon l'une au moins des revendications précédentes 1 à 9 et/ou un dispositif de transport (100) selon la revendication 10.
